# EUROPEAN PATENT SPECIFICATION

(11) **EP 0 490 921 B1**
(45) Date of publication and mention of the grant of the patent: **13.04.1994**
(21) Application number: 90912824.1
(22) Date of filing: 07.09.1990
(51) Int. Cl.: G01V 3/10

(54) **METAL DETECTING SYSTEM**
METALLDETEKTIONSANORDNUNG
SYSTEME DETECTEUR DE METAUX

(30) Priority: 08.09.1989 GB 8920412
(43) Date of publication of application: 24.06.1992
(73) Proprietor: ATOMIC ENERGY OF CANADA LIMITED, Ontario, KOJ 1JO (CA)
(72) Inventor: Ghent, Hugh W., Deep River, Ontario K0J 1P0 (CA)
(74) Representative: Raynor, Simon Mark
(86) International application number: CA9000286
(87) International publication number: WO9103746

(56) References cited:
- EP-A- 0 300 974
- EP-A- 0 308 073
- DE-A- 2 837 265
- US-A- 4 821 023

## Description

### BACKGROUND OF THE INVENTION

The present invention relates, in general, to a metal detection system and, more specifically, to a method and an apparatus capable of detecting tiny metal pieces which may be unlawfully concealed on a person's body.

Industries involved with precious metals including precious metal refineries, mints, jewellery manufacturers and the like require a detecting apparatus which is capable of quickly and efficiently detecting small quantities of precious metals which may be unlawfully concealed on the person of an individual.

Many devices have been developed for detecting metals in the ground and elsewhere. However, such devices are intended to locate relatively massive concentrations of metal in static environments and, frequently, they are designed to exclude signals produced by small amounts of metal. For these and other reasons, metal detectors of this type are not suitable for screening individuals for concealed precious metals.

There also exists a number of metal detecting stations for detecting concealed firearms at airports, public offices, embassies, jails, and even hospitals. They are typically characterized by a portal unit which defines a passageway through which a person is required to pass. Electrical coils extend vertically in parallel relation around the portal unit with one coil, a transmitting coil, being energized by an alternating current to cause it to generate a magnetic field which in turn causes an electrical signal to be induced in the other coils, the receiving coils. Relatively massive metal objects, such as a gun, passed through the unit disturb the magnetic and hence the signals induced in the receive coils. Thus, the output of the coils are monitored to detect such disturbances. Heytow United States Patent No. 4,012,690 granted on March 15, 1977 and Mallick et al United States Patent No. 3,686,564 granted on August 22, 1972 describe devices of this type.

All the metal detecting stations, including those disclosed in the referenced patents, currently known to the inventor use electromagnetic principles. Generally, as indicated above, a transmitting coil connected to an electrical current driving unit is used to generate a time changing magnetic field and receiver coils are used to detect changes in the magnetic field. The changes in the magnetic field occur when either eddy currents are generated in conducting materials brought into the vicinity of the station or when ferromagnetic materials are brought near the station. Most ferrous material exhibit both effects - the eddy current and ferromagnetic effects. The extent to which the magnetic field is changed depends upon many factors including electrical conductivity, magnetic permeability, shape, size, structural properties, density, orientation and location relative to the transmitting coil. The human body is known to be a poor electrical conductor and has slight ferromagnetic properties. Due to the relatively large size of the human body a small but significant change occurs in the magnetic field of these stations when a person passes through. It has been found that, because the signal strength associated with a person is so much stronger than the signal strength associated with a small quantity of a precious metal, such stations are not inherently designed to detect the small quantities of metal as required in industries involved with precious metals including precious metal refineries, mints, jewellery manufacturers and the like.

Kerr United States Patent No. 4,719,421 granted on January 12, 1988 discloses a metal detector for detecting impurities in bakery products and comprises a transmit coil positioned between a pair of receive coils, as in the above referenced prior art, and circuitry which responds to deviation from a standard signal by generating a faulty product signal. The system can be set to distinguish between different types of loaves of bread. This arrangement suffers from the same difficulty mentioned earlier, that being that the size of the human body is so much larger than the small quantity of material it is difficult to distinguish signals associated with the small quantity of material from those associated with the individual carrying the material. Further, characteristics such as the size, shape, density and so forth of human body vary greatly from person to person and, accordingly, it is not possible to categorize humans in the manner in which loaves of bread can be categorized, and to provide preset values as proposed by Kerr against which the output of the receive coils can be compared.

In summary, known metal detection devices do not specifically address the special problems associated with detecting concealed precious metal on humans or objects and to provide a permanent record of a violation when such is detected.

### SUMMARY OF THE INVENTION

The principal object of this invention is to provide a means for detecting the smallest quantity of metal possible being transported, typically unlawfully and usually concealed, by persons passing through a detection station. It is a further object of the present invention to provide a detection system and process whereby the signal is obtained and can be displayed in a graphical form in order to demonstrate, in a court of law if necessary, the signal obtained from an individual passing through the metal detector.

The metal detector described hereafter has the capability of detecting significantly smaller quantities of metal carried by persons than any other currently known and available metal detector. It has the further advantage of displaying a recording of the actual signals obtained. It therefore is especially useful in industries dealing with precious metals including refineries, mints, jewellery manufacturers, etc. although use in a wide variety of other areas is also possible.

Accordingly in one aspect of the present invention there is provided a method of detecting concealed metals comprising the steps of generating a fluctuating electromagnetic field about a passageway, passing a person or object through the passageway, obtaining an electrical signal representative of the change of the electromagnetic field as the person or object passes through the passageway, comparing the values of predetermined characteristics of the electrical signal against the corresponding values of the characteristics of a base electrical signal for the person or object previously obtained when the person or object was known not to contain concealed metals, and generating an alarm signal when the differences between at least one of the characteristics signals exceeds a predetermined threshold.

In accordance with a further aspect of the present invention there is provided an apparatus for detecting concealed metals on a person or object, comprising means for generating an electromagnetic field about a passageway, means for producing an electrical signal representative of the change in the electromagnetic field as the person or object passes through the passageway, means for comparing the values of predetermined characteristics of the signal against corresponding values representative of an electrical calibration signal obtained when the person or object was known not to contain concealed metals, and means for generating an alarm signal when the differences between the values of at least one of the characteristics of the signals exceeds a predetermined threshold.

### BRIEF DESCRIPTION OF THE DRAWINGS

These and other features of the invention will become more apparent from the following description in which reference is made to the appended drawings wherein:
**FIGURE 1** is a perspective view of a typical metal detecting station in accordance with a preferred embodiment of the present invention;
**FIGURE 2** is a perspective view of the coil and winding configuration and associated circuitry for the detecting station;
**FIGURE 3** is a diagrammatic electrical schematic of a circuit in accordance with a preferred embodiment of the present invention;
**FIGURES 4a-4f** illustrate the voltage signal changes in a receive coil as a typical metal-free human body passes through a detecting station with and without the current generated by field-shaping coils;
**FIGURES 5a-5c** illustrate typical signal changes in the receive coil as various objects are brought close to the receive coil and then withdrawn;
**FIGURE 6** is a logic flow chart illustrating the manner in which a person's calibration values are determined;
**FIGURE 7** is a logic flow diagram illustrating the normal operation of the detection system.

### DESCRIPTION OF PREFERRED EMBODIMENT

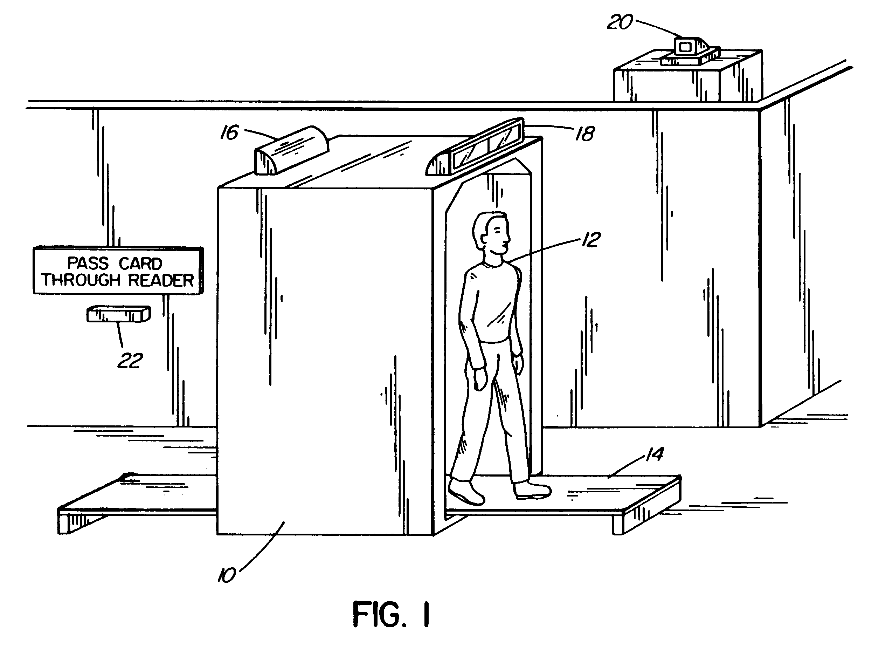

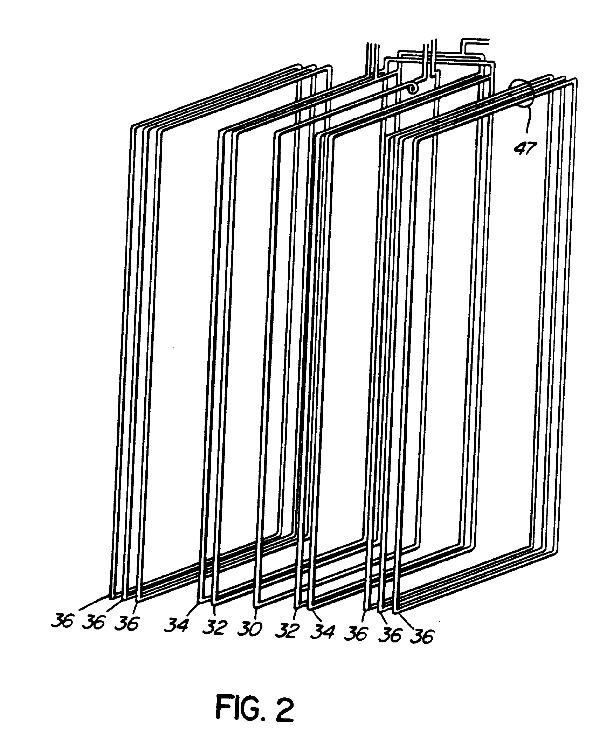

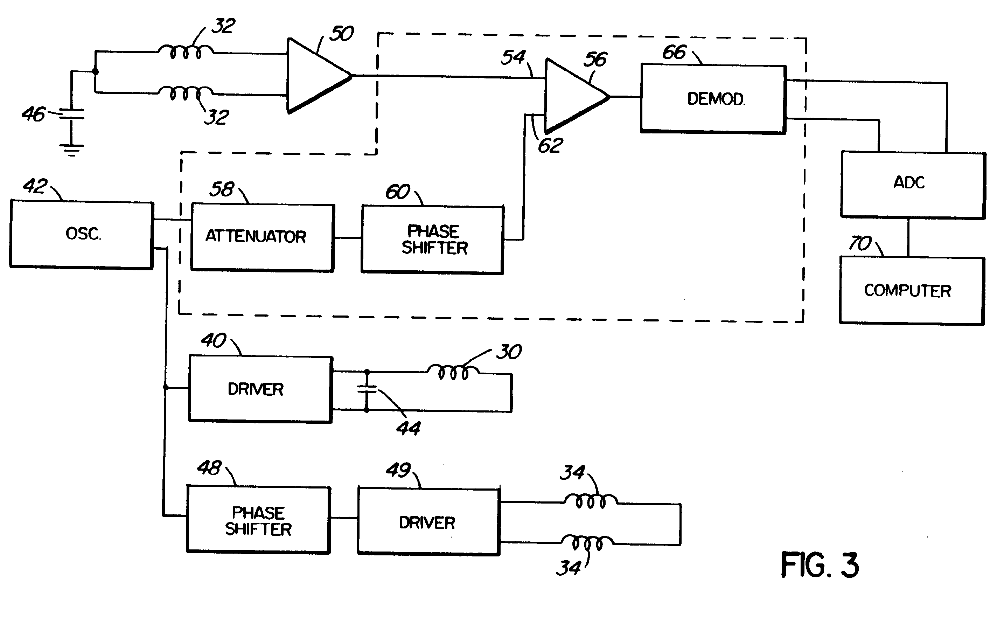

With reference now to the drawings, **FIGURE 1** shows a typical metal detection station comprising the open-ended enclosure or portal unit **10** with a person **12** walking through the portal unit on a shallow platform **14**, an entry display **16** and an exit display **18**, both mounted on the portal unit, a computer console **20** and a card reader **22** connected to the computer system. An electrical transmit coil, discussed later with reference to **FIGURES 2** and **3**, is disposed about the portal unit and generates a magnetic field at a predetermined alternating frequency. Similarly, electrical receive coils are disposed about the portal unit in a manner described later and produce alternating electrical signals in response the magnetic field in their vicinity. The signals are further processed and then digitized and transmitted to the computer system. The receive coils produce a characteristic signal when the portal is empty. Similarly, a person walking through the portal will influence the magnetic field in a distinctive manner and it has been found that it is possible to detect these distinctive characteristics from the output of the receive coils. Thus, in accordance with one aspect of the present invention, each person with pass privileges is required to walk through the portal without metal objects for the purpose of producing a base or calibration signal which is processed to quantify the characteristics. These characteristics are stored in computer memory so that whenever the individual passes through the portal unit, the computer will compute and compare the characteristics of the receive coil with the calibration characteristics to determine whether the individual is carrying concealed metals. It will be understood that the present invention is not limited to humans and that it is equally applicable to animals and inanimate objects. Thus, unless otherwise indicated, the reference to "person" is to be taken to apply to animals and inanimate objects.

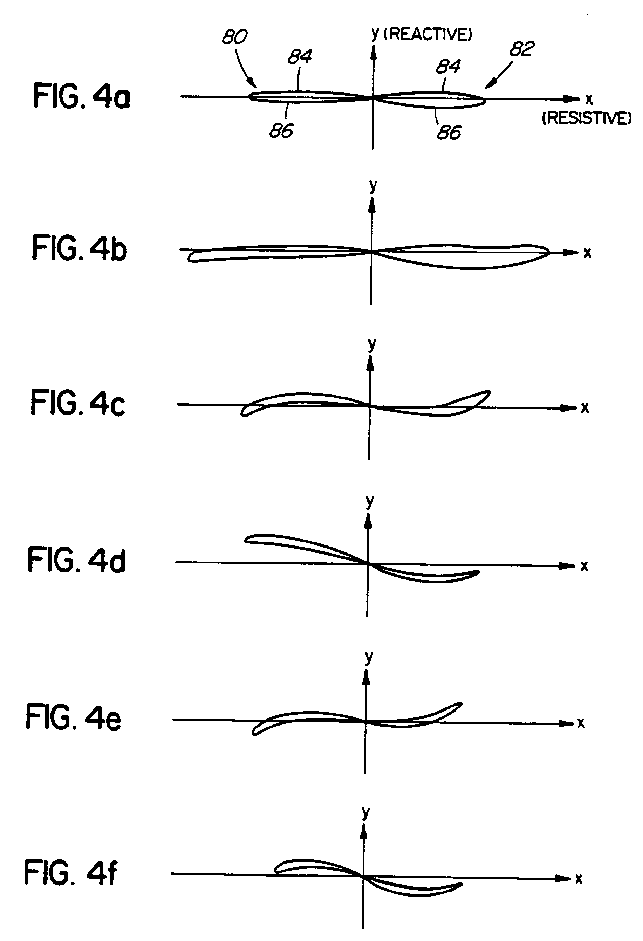

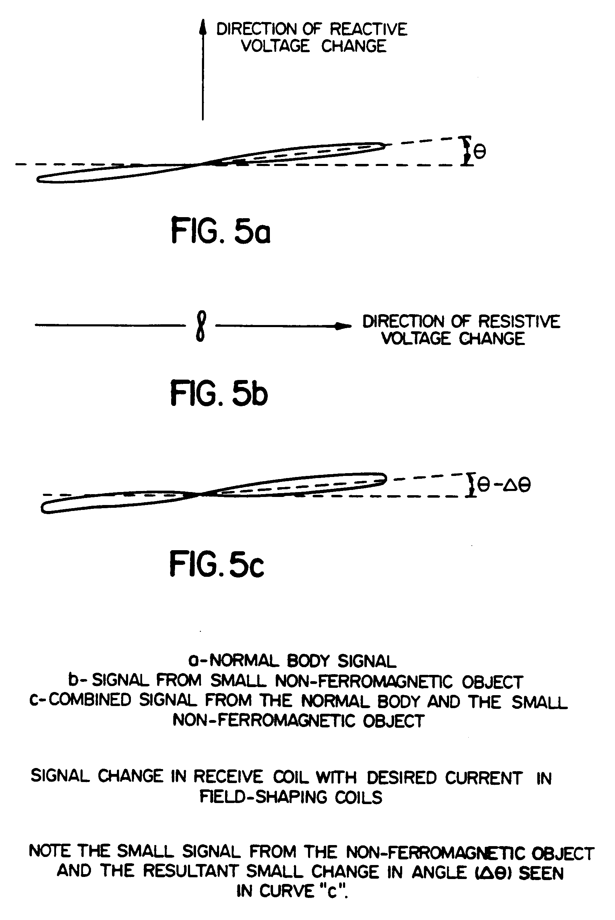

Under normal operation, a person inserts an identification card into card reader **22** and waits for permission to walk through the portal unit. The card reader reads the card in known manner and transmits signals representative of the identity of the person to the computer system. If the person's status in the computer system is such that it is permissible for the person to pass through the portal unit, the display on the entry sign **16** will so indicate. The system is able to recognize when the person has entered and exited the portal unit by comparing the output of the receive coils against the signal characteristics of an empty portal. When the system recognizes that the person has exited the portal, it processes the signals which were produced while the person was in the portal and compares them to the base or calibration values discussed earlier for that individual. Based upon this comparison, the exit display **18** will indicate either a "clean" or an "alarm" condition. The envelope of the signal generated (similar to that shown in **FIGURES 4** and **5**) when the person passed through the portal can be displayed graphically on the computer monitor for visual observation by the operator. This display and other relevant data may be printed on paper to serve as a permanent record if desired.

**FIGURE 2** illustrates an arrangement of coils in accordance to the preferred embodiment of the present invention. A transmit coil **30** is disposed substantially midway along the length of the portal and is operable to produce an alternating magnetic field within the portal. A pair of receive coils **32** are coaxially disposed on opposite sides and equidistantly from the transmit coil and operate to produce an electrical signal in response to changes to magnetic fields within their respective fields of influence. A field-shaping coil **34** is coaxially disposed proximate each receive coil and on the side thereof remote from the transmit coil. The field-shaping coils serve to reduce the effect of objects, such as a person's feet, placed in close proximity to the receive coils. Finally, at least one pair of field-shielding coils **36** are coaxially disposed on the axially outer sides of the field-shaping coils. These coils serve to reduce the magnetic field extending axially from the portal unit. While the field-shaping and field-shielding coils enhance system performance, they are not essential to successful operation of the system. All of the coils are located in planes which are perpendicular to the axis of the passageway through portal unit **10** and are fixedly mounted in or on the walls of the portal unit to avoid vibrations which would disturb the magnetic fields by suitable insulated mountings (not shown). The portal unit also incorporates magnetic field shielding comprising thin narrow strips of ferromagnetic material in at least its top and side walls as described in more detail later.

With reference to **FIGURE 3**, a driver **40** delivers a high frequency current to transmit coil **30** at a frequency, typically 25 kHz, determined by oscillator **42**. This rapidly changing current generates a magnetic field about the axis of transmit coil. A capacitor **44** is connected across the input leads to the transmit coil and is chosen to cause a resonant condition in the transmit coil and serves to significantly amplify the current in the transmit coil and the magnetic field strength about the coil.

The receive coils are responsive, by producing a current therein, to all magnetic fields and changing currents in their respective vicinities including the alternating magnetic field produced by the transmit coil, the field-shaping coils, field-shielding coils and ferromagnetic material and ferrous material in which eddy currents are produced. If the coils are wound with precision, such that the spacings between respective windings are accurately controlled and substantially identical on each side of the transmit coil, then the currents and voltages induced in each receive coil will be substantially identical.

As best shown in **FIGURE 3**, the receive coils **32** are connected together in series such that as the voltage in one coil increases, the voltage in the other decreases. In this way, the resultant voltage across both coils is substantially zero. A capacitor **46** across the output leads of the receive coils is chosen such that it will cause a resonant condition between the two receive coils. Any small voltage differences between the two windings will then be greatly increased due to this resonant condition.

In practice, it is virtually impossible to wind the transmit and receive coils with exact precision. These differences, along with general wiring connections and other external influences, will cause significant non-symmetrical influences on the magnetic fields inside the portal unit. Therefore, the induced voltages in each receive coil are not in general identical - albeit they are very close. Hence, it is necessary, in order to achieve a balanced condition, to provide a means to adjust or trim the voltage induced in each receive coil. A quadrature adjusting means is provided to balance the "in-phase" and the "out-of-phase" components of the signals. There are in general many conceivable ways to accomplish this adjustment. In the illustrated embodiment, a wire loop **47** having its axis normal to the axis of the coils, and miscellaneous adjustments of the transmit leads are used to zero the induced voltage across the combined receive coils.

The field-shaping coils are used to generate an additional magnetic field in such a way as to enhance the detection of metal. It will be noticed that the field-shaping coils **34** are in close proximity to the receive coils **32**. It should also be noted that, typically, the only part of the human body that comes in close proximity to the receive coils are the feet (typically, a few centimetres spacing). Due to physical constraints, it is impractical to design units in which this is not the case. The design of the units can be such that greater clearances for arms, hands and heads are achieved. The voltage change in the receive coils due to a particular object increases as the distance from the object to the receive coil decreases. Therefore, the receive coils are inherently more sensitive to the feet of an individual walking through the unit. Furthermore, significantly greater variation in the signal received by the receive coil will occur depending on the foot position relative to the receive coils. This type of variation will not be as significant for other parts of the body. In order to reduce the detrimental effects of the variation in the voltage induced in the receive coils due to the position of the feet, an additional current can be generated in the field-shaping coils. The advantages of having this additional current will become apparent later. In the present configuration, a separate phase shifter **48** and driver **49** are used to control the phase and amplitude of the current in the field shaping coils. An alternate means of achieving similar currents in the field-shaping coils could be achieved by carefully designing the coil and selecting appropriate passive components (resistors, capacitors and inductors), not requiring the use of the phase shifter **48** and driver **49**.

The primary function of the field shielding coils **36** is to effectively reduce the magnetic field extending axially from the portal unit. The induced current in these coils creates a magnetic field which opposes (or reduces) the magnetic field which generates it. In this way, the magnetic field extending from the portal unit is also decreased. Therefore, ferromagnetic materials, which tend to focus the magnetic field through these materials when brought into close proximity to the front or rear of the unit, will have a greatly reduced influence on the non-symmetrical magnetic field distribution generated inside the portal unit. In the present configuration, the field shielding coils are shown to be located or spaced a distance axially outwardly from the respective transmit and receive coils. This is necessary in order to minimize the effect the field-shielding coils would have on the magnetic field in the vicinity of the receive coil.

The previously noted narrow ferromagnetic shielding strips (not shown) extend over the exterior surface of the portal unit on at least the sides and top. The purpose of these strips is to constrain, as much as possible, the magnetic fields generated by the transmit and field-shaping coils so they remain substantially within the portal unit. If no significant magnetic fields are able to leave the unit, then no significant eddy currents can be induced in electrically conducting materials exterior to the unit, and, if no eddy currents are generated, then no additional magnetic fields can be generated which would normally have been sensed by the receive windings. Similarly, ferromagnetic components close to the exterior of the unit would have a minimal influence on the magnetic fields inside the unit. This unit therefore provides a degree of electromagnetic shielding to the front and sides.

The output of the receive coils are connected to detection electronics commonly found in commercially-available, eddy current non-destructive testing instrumentation. One type of eddy current instrument which has been used successfully in laboratory tests is known as the "Defectomat F", by Institut. Dr. Forster of West Germany. Less expensive eddy current instruments are available from a number of suppliers. Other instruments are available from the following companies: Eddy Current Technology, Elotest, Hocking, Nortec; Reluxtrol, Tecrad and Zetec, certain of which can supply separate digitizing cards. This electronics, in general, has the capability of effectively balancing the small residual voltage remaining on the receive coil after the walk-through unit has been installed, and detecting the change in magnitude and direction (phase) of the voltage change in the receive coils. As explained below, the output of the detection electronics is comprised of two voltages which can be resolved into a resistive voltage change and a reactive voltage change. During system operation, these voltages are being constantly digitized by separate digital circuitry, and the values are received by the computers.

**FIGURE 3** illustrates the basic components and operation of the detection electronics. The output terminals of the receive coils are each connected to an input of an amplifier **50** whose output **52** is connected to one input terminal **54** of a summer or adder **56**. The output of oscillator **42** is passed through an attenuator **58** and a phase shifter **60** and applied to the other input terminal **62** of the summer. The output of the summer is a signal which is the difference of the two input signals. Thus, when the portal is empty, the output of the receiver coils will be the same as the input to the transmit coil and, accordingly, the difference in the magnitude of the two signals will be zero. However, if a person or object is passing through the portal, the magnitude and phase of the output of the receiver coils will be different, resulting in a non-zero summer output. The summer output is delivered to a demodulator **66** which produces two DC level signals, one being representative of the resistive component of the signal and the other being representative of the reactive component of the signal. These two signals are then delivered to an analog-to-digital converter which digitizes the signals and feeds the digitized signals to the computer **70**.

Before describing the digital signal processing scheme of the present invention, it would be useful to briefly review the types of signals sensed by the receive coils. An understanding of these signals is required in order to appreciate the value of field shaping coils **34** and to understand how the signal analysis is able to discriminate differences in the processed receive coil voltages.

As indicated above, the induced signal in the receive coils can be resolved into two components, namely, a resistive component and a reactive component. These components can be plotted on a graph in which the reactive component is plotted along the ordinate (y-axis) and the resistive component is plotted along the abscissa (x-axis). When a ferromagnetic material is brought into the vicinity of the receive coil, the magnetic field inside the coil increases due to the higher magnetic permeability of the ferromagnetic material. The increase in magnetic field strength causes a voltage increase in the receive winding (**FIGURE 4**). The voltage increase is 90° out-of-phase with the voltage induced in the receive coil due to the magnetic field generated by the current in the transmit coil, and is therefore identified as a voltage increase having a direction along the positive reactive axis (see Signal No. 1 in **FIGURE 4**). Now consider the effects on the detection system of two loops of copper wire, each about 5 cm in diameter. One loop will be made of a wire having a very small cross-sectional area (for example #43 AWG) and the other of a larger cross-sectional area (for example #14 AWG). When the thin wire loop is brought close to one of the receive coils, a voltage will be induced in it due to the magnetic field generated from the current in the transmit coil. Because the resistance of the thin loop is high relative to the loop's reactance, the current in the loop will be substantially in phase with the induced voltage. As a result the magnetic field due to the current in the thin loop will increase, and hence the voltage induced in the receive coil will increase with an "in-phase" orientation (see Signal No. 2 as shown in **FIGURE 4**). When the thicker wire loop is brought close to the receive coil, a similar voltage is induced in it from the magnetic field generated by the currents in the transmit coil. However, the reactive impedance is far greater than the resistive impedance of this loop, and, as a result, the current generated in the loop generates a magnetic field which opposes the magnetic field which induced the voltage. As a result, the voltage induced in the receive coil will decrease, and this decrease is 90° out-of-phase with the initial voltage induced in the receive coil from the transmit coil (see Signal No. 3 in **FIGURE 4**).

Therefore, it can be understood from the above examples that, depending upon an object's magnetic and conductive properties, shape, size, structural properties, density, orientation and location relative to the various coils in the metal detector, a range of signals having orientations of up to 180° is possible. Typically, most precious metals have a high conductivity and so the voltage change tends to be in the negative reactive direction. However, very thin materials (for example platinum gauze) will exhibit properties like that of the thin wire.

It will be seen that while a person or object passes through the portal unit the magnetic field about each receive coil will fluctuate. If the receive coil output is sampled at equal increments of time, resolved into its resistive and reactive components and plotted on a graph as described above, a curve similar to that illustrated in **FIGURES 4** and **5** will result. The curve is characterized by two loops **80** and **82** in which loop **80** indicates the response of the receive coil proximate the entrance of the portal unit and loop **82** indicates the response of the receive coil proximate the exit of the portal unit. Each loop has an approach section **84** in which the strength of the signal increases in magnitude and a departure section **86** in which the strength of the signal decreases in magnitude.

As stated earlier, the human body is known to be a poor conductor and has slight ferromagnetic properties. Due to the size of the body, the signal change detected by the receive coils due to the presence of the body can be significantly greater than the signal of interest, typical of the small metal object being carried by the person. A typical signal, sensed by the receive coils from the human body as it passes through the metal detector being described, is shown in **FIGURE 5a**. This signal shows the response of each receive coil, and hence we see the positive and negative components of the signal. It is clear from this signal that the body has a much higher conductive component than it has a ferromagnetic component. **FIGURE 5b** shows the much smaller response for a tiny metal object alone as it is passed through the portal unit and **FIGURE 5c** shows the signal when the tiny metal object is being passed through the detector on the human body. It follows from the foregoing that the output of the receive coils will vary with the manner in which an individual walks through the unit, i.e., side to side and front to back motion, swinging arms, etc. These variations cause the normal signal to vary somewhat and potentially inhibit the ability to detect small quantities of metal. To increase the detectability of small objects, it is therefore advisable to require employees to walk through the unit in a reasonable consistent and predetermined way.

The effect of the field shaping coils can now be appreciated. In order to demonstrate the effect of a person's foot as he walks through the portal, signals from a plastic container containing a salt water solution were obtained. This container was moved through the portal in a manner similar to that of a person's foot, and the signals are shown in **FIGURES 4a** and **4b**. It will be noted that the signal without the field shaping current is approximately 50% greater than the signal with the field shaping current. **FIGURES 4c** and **4e** show the signal from a person walking through the portal without (**FIGURE 4c**) and with (**FIGURE 4e**) the field shaping current. The signal without the field shaping current is only about 20% greater than that with the field shaping current. This is expected since the predominant effect of the field shaping current will occur on things closest to it (i.e. the feet) and to a lesser extent on things more removed (i.e. the legs, torso and head). **FIGURE 4d** and **4f** show the signals of a person walking through the portal with a coin in the front pocket without (**FIGURE 4d**) and with (**FIGURE 4f**) the field shaping current. The change in the middle angle is significantly greater for the case with the field shaping current (about 13°) than without the field shaping current (about 9°). Therefore, by utilizing field shaping currents, a significant increase in the detectability of small metal objects being carried by individuals is obtained.

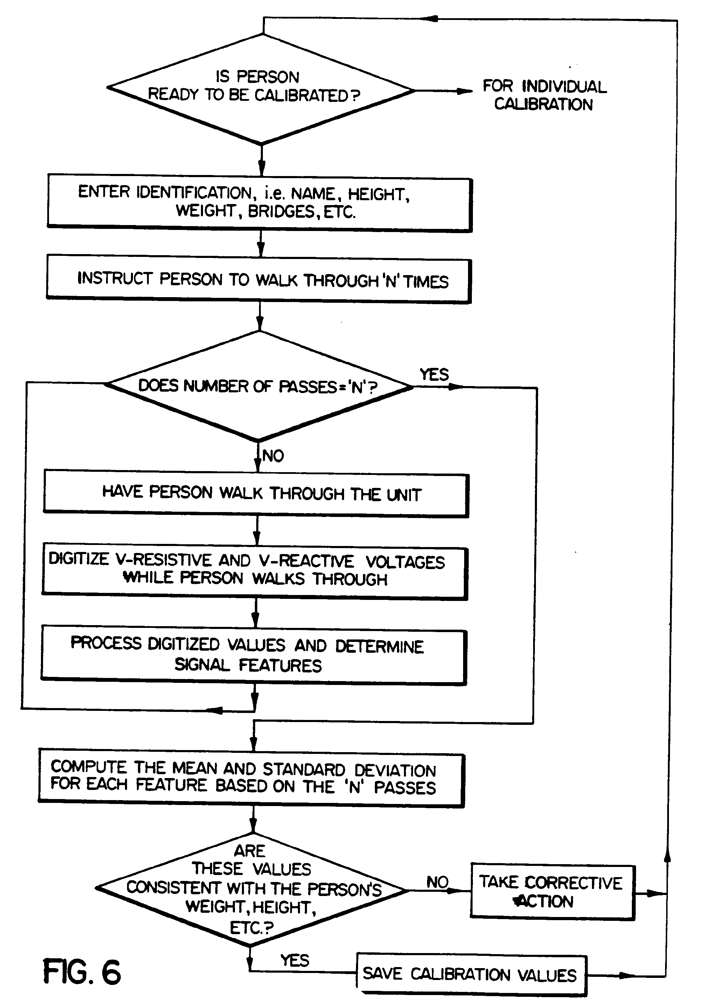

Each person who walks through the portal unit must have first been calibrated. The calibration process is illustrated in the flow chart of **FIGURE** **6.** The calibration process consists of the individual walking through the unit a number of times - for example 8 times. During each pass through the unit, the computer system receives the digitized voltage values. Based on these values, it determines when the signal starts and ends, and computes various characteristics of the signal for each pass. These characteristics can include, for example, the maximum positive and negative reactive components, the maximum positive and negative resistive components, the sum of the absolute values of the positive and negative reactive components of the signal, the sum of the absolute values of the positive and negative resistive components of the signal, the angle defined by these two sums called the differential angle, the angle of the middle portion, (e.g. the middle three-fifths) of each of the approach and departure sections of the two loops, and a middle angle defined by the terminal portion of the departure section of the first loop and the initial portion of the approach section of the second loop. These angles may be computed by any suitable technique, such as linear regression techniques, well known to those skilled in the art. The mean and standard deviation of each of these characteristics are then computed, and can be checked against the individual's weight, height and other significant features (e.g., implants, dental bridges etc.) to ensure the values are consistent with those expected. If the values are satisfactory, they are stored in computer memory in association with other particulars, such as name, identification code and the like, for the individual. These values are considered the individual's calibration values and are used during normal operation. An advantage of this approach is that it considerably reduces the amount of computer memory required for each individual. It is possible, of course, to store the raw data, samples taken at small increments of time as the person passes through the portal unit. However, such an approach would consume a considerable amount of computer memory and would introduce considerable complexity into the signal analysis algorithm.

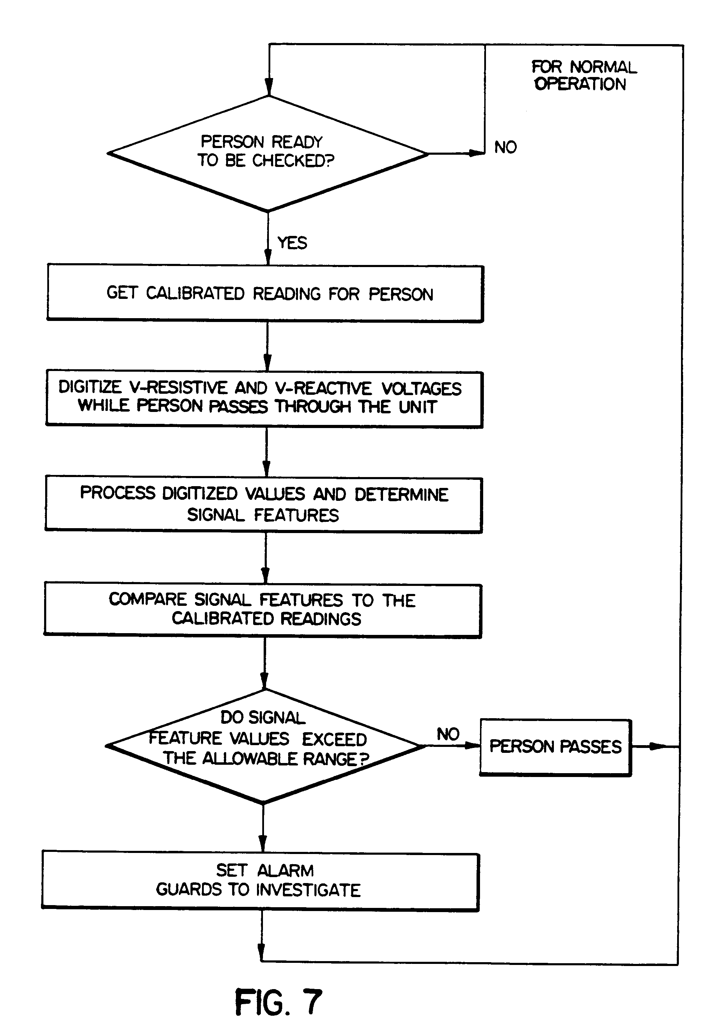

During normal operation, as illustrated by the logic flow chart of **FIGURE 7**, after the individual has been identified by the computer system and instructed to walk through the unit, the computer system receives the processed receive coil voltage changes in digitized form, determines the characteristic values of the signal and then compares these values to the calibration values previously described. Based on this comparison, a decision is made as to whether an alarm or non-alarm condition is present. The results of this decision are then displayed on exit display **18** so that an attending security guard can take appropriate action.

## Claims

1. A method of detecting concealed metals comprising the steps of:
generating a fluctuating electromagnetic field about a passageway;
passing a person or object through said passageway, and
obtaining an electrical signal representative of said electromagnetic field as said person or object passes through said passageway; characterised by
comparing the values of predetermined characteristics of said electrical signal against the corresponding values of said characteristics of a base electrical signal for said person or object previously obtained when said person or object was known not to contain concealed metals; and
generating an alarm signal when the difference between the compared values of at least one of said characteristics of said signals exceeds a predetermined threshold.

2. A method as defined in claim 1, said producing step including processing said electrical signal to determine quantitative values for each of said characteristics of said signal and said comparing step including comparing said quantitative values against corresponding base values of said characteristics for said person or object previously obtained when said person or object was known not to contain concealed metals.

3. A method as defined in claim 2, said processing step including demodulating said electrical signal to produce a first signal representative of the resistive component of said electromagnetic field and a second signal representative of the reactive component of said electromagnetic field.

4. A method as defined in claim 3, said processing step including the steps of:
determining the magnitude of each said first and second signals at predetermined increments of time;
determining the maximum amplitude of each of said first and second signals;
determining an overall differential phase angle between said first and second signals;
determining an intermediate differential phase angle between said first and second signals; and
determining a differential phase angle for each of a plurality of different positions of said person or object in said passageway.

5. An apparatus for detecting concealed metals on a person or object, comprising:
means for generating an electromagnetic field about a passageway;
means for producing an electrical signal representative of said electromagnetic field as said person or object passes through said passageway; and characterised by
means for comparing the values of predetermined characteristics of said signal against corresponding values representative of an electrical calibration signal obtained when said person or object was known not to contain concealed metals; and
means for generating an alarm signal when the difference between the compared values of at least one of said characteristics of said Signals exceeds a predetermined threshold.

6. An apparatus as defined in claim 5, said producing means including means for demodulating said electrical signal to produce a first signal representative of the resistive component of said electromagnetic field and a second signal representative of the reactive component of said electromagnetic field.

7. An apparatus as defined in claim 6, said producing means being operable to determine the magnitude of each said first and second signals at predetermined increments of time, the maximum amplitude of each of said first and second signals, an overall differential phase angle between said first and second signals, an intermediate differential phase angle between said first and second signals, and a differential phase angle for each of a plurality of different positions of said person or object in said passageway.

8. An apparatus as defined in claim 5, said means for generating an electromagnetic field about a passageway including a transmit coil extending about said passageway with an axis extending longitudinally through said passageway and means for producing an alternating current at a predetermined frequency within said coil so as to form said magnetic field about said coil.

9. An apparatus as defined in claim 8, said means for producing an electrical signal including a pair of receive coils about said passageway and coaxially spaced apart on opposite sides of said transmit coil, said receive coils having a common terminal and output terminals and being responsive to a changing magnetic field within said passageway to produce alternating voltages across said receive coils.

10. An apparatus as defined in claim 9, further including an amplifier having input terminals connected to said output terminals of said receive coils and an output terminal for producing said electrical signal.

11. An apparatus as defined in claim 10, further including means for producing and matching a reference signal to said electrical signal from said receive coils and means for obtaining a difference signal which is the difference between the amplified receive coil output signal and said reference signal.

12. An apparatus as defined in claim 11, further including a demodulator for receiving said differential signal and producing first and second output signals representative of the resistive and reactive components of said differential signal.

13. An apparatus as defined in claim 12, further including converter means for converting first and second output signals to first and second digital output signals, respectively.

14. An apparatus as defined in claim 13, further including computation means for processing said first and second digital output signals to determine the values of predetermined characteristics of thereof and compare said values against predetermined calibration values of said characteristics representative of said person or object.

15. An apparatus as defined in claim 14, said computation means being operable to determine the magnitude of each said first and second signals at predetermined increments of time, the maximum amplitude of each of said first and second signals, an overall differential phase angle between said first and second signals, an intermediate differential phase angle between said first and second signals, and a differential phase angle and signal magnitudes for each of a plurality of different positions of said person or object in said passageway.

16. An apparatus as defined in claim 10, further including means for reducing the effect of objects moving in said passageway in close proximity to said receive coils.

17. An apparatus as defined in claim 16, said reducing means including field shaping coil means associated with said receive coil means and responding to the magnetic field in the vicinity thereof by inducing an additional magnetic field in said station whereby voltages induced in the receive coil means are substantially influenced by currents flowing in the associated field shaping coil means.

18. An apparatus as defined in claim 17, wherein further including means for maintaining said additional magnetic field in an selected out-of-phase relationship with respect to the magnetic field generated by said transmit coil means.

19. An apparatus as defined in claim 5, further including a portal unit defining said passageway through which the person moves with said coil means being coaxially located with respect to each other in planes generally perpendicular to the axis of the passageway along which the person moves.

20. An apparatus as defined in claim 18, said field shaping coil means comprising a pair of field shaping coils, each located adjacent to a respective one of said receive coils.

21. An apparatus as defined in claim 10, further including capacitor means connected to said common terminal to produce a resonant condition between said receive coils during operation such that as the voltage in one receive coil increases the voltage in the other decreases so the net voltage across both receive coils is substantially zero when there said passageway is empty.

22. An apparatus as defined in Claim 10, further including means to zero or null any induced imbalanced voltages across the receive coils arising from coil winding inaccuracies and the like.

23. An apparatus as defined in any of the preceding claims, further including ferromagnetic shielding means located and arranged to reduce or eliminate eddy currents and resulting magnetic field disturbances arising in materials exterior to the detecting station.

24. An apparatus as defined in any of the preceding claims, further including field shielding coil means spaced outwardly from the receive coil and field shaping coil means and arranged such that currents induced in the field shielding coils by the fluctuating magnetic fields in the station create still further magnetic fields which act to reduce the strength of magnetic fields extending outwardly away from the detecting station.

## Patentansprüche

1. Verfahren zur Detektion verborgener Metalle, umfassend die Schritte:
Erzeugen eines fluktuierenden elektromagnetischen Felds über einen Durchgang;
Durchführen einer Person oder eines Objekts durch diesen Durchgang und Erzielen eines elektrischen Signals, welches für das genannte elektromagnetische Feld zum Zeitpunkt, in dem die Person oder das Objekt den Durchgang passiert, charakteristisch ist; *gekennzeichnet* durch die Schritte:
Vergleichen der Werte von vorbestimmten charakteristischen Merkmalen des genannten elektrischen Signals mit den entsprechenden Werten dieser charakteristischen Merkmale eines elektrischen Basissignals, welches zuvor für die Person oder für das Objekt zu einem Zeitpunkt erzielt worden ist, in dem bekannt war, dass die Person oder das Objekt keine verborgenen Metalle trug; und
Erzeugen eines Alarmsignals, falls die Differenz zwischen den verglichenen Werten zumindest eines charakteristischen Merkmals des genannten elektrischen Signals einen vorbestimmten Schwellwert überschreitet.

2. Verfahren nach Patentanspruch 1, wobei der genannte Erzeugungsschritt ein Verarbeiten des elektrischen Signals zur Ermittlung quantitativer Werte für jedes der charakteristischen Merkmale des Signals einschliesst und der genannte Vergleichsschritt das Vergleichen dieser quantitativen Werte mit entsprechenden Basiswerten der charakteristischen Merkmale, welche zuvor für die Person oder für das Objekt zu einem Zeitpunkt erhalten worden sind, in dem bekannt war, dass die Person oder das Objekt keine verborgenen Metalle trug, umfasst.

3. Verfahren nach Patentanspruch 2, wobei der genannte Verarbeitungsschritt ein Demodulieren des elektrischen Signals zur Erzeugung eines ersten, für die Wirkkomponente des elektromagnetischen Felds charakteristischen Signals und eines zweiten, für die Blindkomponente des elektromagnetischen Felds charakteristischen Signals einschliesst.

4. Verfahren nach Patentanspruch 3, wobei der genannte Verarbeitungsschritt die folgenden Schritte einschliesst:
Ermittlung der Grösse jedes der genannten ersten und zweiten Signale nach vorbestimmten Zeitabschnitten;
Ermittlung der maximalen Amplitude jedes der ersten und zweiten Signale;
Ermittlung eines gesamten differentiellen Phasenwinkels zwischen den ersten und zweiten Signalen;
Ermittlung eines mittleren differentiellen Phasenwinkels zwischen den ersten und zweiten Signalen; und
Ermittlung eines differentiellen Phasenwinkels für jede einer Mehrzahl von unterschiedlichen Positionen der Person oder des Objekts im Durchgang.

5. Vorrichtung zur Detektion verborgener Metalle an einer Person oder einem Objekt, umfassend:
Mittel zur Erzeugung eines fluktuierenden elektromagnetischen Felds über einen Durchgang;
Mittel zur Erzeugung eines elektrischen Signals, welches für das genannte elektromagnetische Feld zum Zeitpunkt, in dem die Person oder das Objekt den Durchgang passiert, charakteristisch ist; und *gekennzeichnet* durch:
Mittel zum Vergleichen der Werte von vorbestimmten charakteristischen Merkmalen des genannten elektrischen Signals mit entsprechenden Werten, die für ein elektrisches Eichsignal charakteristisch sind, welches zu einem Zeitpunkt erzielt worden ist, in dem bekannt war, dass die Person oder das Objekt keine verborgenen Metalle trug; und
Mittel zur Erzeugung eines Alarmsignals, falls die Differenz zwischen den verglichenen Werten zumindest eines charakteristischen Merkmals des genannten Signals einen vorbestimmten Schwellwert überschreitet.

6. Vorrichtung nach Patentanspruch 5, wobei die genannten Mittel zur Signalerzeugung Mittel zum Demodulieren des genannten Signals zwecks Erzeugung eines ersten, für die Wirkkomponente des elektromagnetischen Felds charakteristischen Signals und eines zweiten, für die Blindkomponente des elektromagnetischen Felds charakteristischen Signals einschliessen.

7. Vorrichtung nach Patentanspruch 6, wobei die genannten Mittel zur Signalerzeugung in der Lage sind, folgendes zu ermitteln: die Grösse jedes der genannten ersten und zweiten Signale nach vorbestimmten Zeitabschnitten, die maximale Amplitude jedes der ersten und zweiten Signale, einen gesamten differentiellen Phasenwinkel zwischen den ersten und zweiten Signalen, einen mittleren differentiellen Phasenwinkel zwischen den ersten und zweiten Signalen sowie einen differentiellen Phasenwinkel für jede einer Mehrzahl von unterschiedlichen Positionen der Person oder des Objekts im Durchgang.

8. Vorrichtung nach Patentanspruch 5, wobei die genannten Mittel zur Erzeugung eines elektromagnetischen Felds über einen Durchgang eine Sendespule, die sich über den Durchgang erstreckt und eine sich längs durch den Durchgang erstreckende Achse aufweist, sowie Mittel zur Erzeugung eines Wechselstroms mit einer vorbestimmten Frequenz in der genannten Spule einschliessen, um das genannte Magnetfeld um die genannte Spule zu bilden.

9. Vorrichtung nach Patentanspruch 8, wobei die genannten Mittel zur Erzeugung eines elektrischen Signals zwei Empfangsspulen über dem Durchgang und koaxial beabstandet zu den gegenüberliegenden Seiten der Sendespule einschliessen, und die Empfangsspulen einen gemeinsamen Anschluss sowie Ausgangsanschlüsse aufweisen und auf ein änderndes Magnetfeld im Durchgang ansprechen, so dass Wechselspannungen über den Empfangsspulen erzeugt werden.

10. Vorrichtung nach Patentanspruch 9, weiter einschliessend einen Verstärker, welcher Eingangsanschlüsse, die mit den Ausgangsanschlüssen der Empfangsspulen verbunden sind, und einen Ausgangsanschluss zur Erzeugung des genannten elektrischen Signals aufweist.

11. Vorrichtung nach Patentanspruch 10, weiter einschliessend Mittel zur Erzeugung eines Referenzsignals und dessen Anpassung an das genannte elektrische Signal von den Empfangsspulen sowie Mittel zur Erzielung eines Differenzsignals, welches die Differenz zwischen dem verstärkten Empfangsspulen-Ausgangssignal und dem Referenzsignal ist.

12. Vorrichtung nach Patentanspruch 11, weiter einschliessend einen Demodulator, der das genannte Differenzsignal empfängt und erste und zweite Ausgangssignale erzeugt, die für die Blind- und Wirkkomponenten des Differenzsignals charakteristisch sind.

13. Vorrichtung nach Patentanspruch 12, weiter einschliessend Umsetzungsmittel zum Umsetzen der ersten und zweiten Ausgangssignale in erste bzw. zweite digitale Ausgangssignale.

14. Vorrichtung nach Patentanspruch 13, weiter einschliessend Rechenmittel zur Verarbeitung der genannten ersten und zweiten digitalen Ausgangssignale zwecks Ermittlung der Werte der vorbestimmten charakteristischen Merkmale dieser Signale und Vergleichen dieser Werte mit vorbestimmten Eichwerten der charakteristischen Merkmale für die Person oder das Objekt.

15. Vorrichtung nach Patentanspruch 14, wobei die genannten Rechenmittel in der Lage sind, folgendes zu ermitteln: die Grösse jedes der genannten ersten und zweiten Signale nach vorbestimmten Zeitabschnitten, die maximale Amplitude jedes der ersten und zweiten Signale, einen gesamten differentiellen Phasenwinkel zwischen den ersten und zweiten Signalen, einen mittleren differentiellen Phasenwinkel zwischen den ersten und zweiten Signalen sowie einen differentiellen Phasenwinkel und Signalgrössen für jede einer Mehrzahl von unterschiedlichen Positionen der Person oder des Objekts im Durchgang.

16. Vorrichtung nach Patentanspruch 10, weiter einschliessend Mittel zur Reduktion des Einflusses von Objekten, welche sich im genannten Durchgang in unmittelbarer Nähe zu den Empfangsspulen bewegen.

17. Vorrichtung nach Patentanspruch 16, wobei die genannten Reduktionsmittel Spulenmittel zur Feldformung einschliessen, die den Empfangsspulenmitteln zugeordnet sind und auf das Magnetfeld in deren Nähe ansprechen, indem sie ein zusätzliches Magnetfeld in der genannten Station induzieren, wodurch Spannungen, welche in den Empfangsspulenmitteln induziert werden, durch Ströme, welche in den zugeordneten Spulenmitteln zur Feldformung fliessen, wesentlich beeinflusst werden.

18. Vorrichtung nach Patentanspruch 17, weiter einschliessend Mittel zum Aufrechterhalten des genannten zusätzlichen Magnetfelds in einer phasenverschobenen Beziehung zu dem durch die genannten Sendespulenmittel erzeugten Magnetfeld.

19. Vorrichtung nach Patentanspruch 5, weiter einschliessend eine den genannten Durchgang, durch den sich die Person bewegt, definiernde Portaleinheit mit den genannten Spulenmitteln, die in bezug aufeinander koaxial in im wesentlichen senkrecht zu dem Durchgang, durch den sich die Person bewegt, verlaufenden Ebenen angeordnet sind.

20. Vorrichtung nach Patentanspruch 18, wobei die genannten Spulenmittel zur Feldformung zwei Feldformungsspulen umfassen, die jeweils benachbart zu einer entsprechenden der Empfangsspulen angeordnet sind.

21. Vorrichtung nach Patentanspruch 10, weiter einschliessend Kondensatormittel, welche mit dem genannten gemeinsamen Anschluss verbunden sind, um während des Betriebs einen Resonanzzustand zwischen den Empfangsspulen zu schaffen, so dass, sobald sich die Spannung in der einen Empfangsspule vergrössert, die Spannung in der anderen Empfangsspule verkleinert wird und dadurch die Gesamtspannung über beide Empfangsspulen bei leerem Durchgang im wesentlichen gleich Null ist.

22. Vorrichtung nach Patentanspruch 10, weiter einschliessend Mittel zum Aufheben oder Nullstellen von über den Empfangsspulen induzierten unsymmetrischen Spannungen, welche von Windungsungenauigkeiten der Spule oder dergleichen herrühren.

23. Vorrichtung nach irgendeinem der vorangehenden Patentansprüche, weiter einschliessend ferromagnetische Abschirmmittel, welche so angeordnet und eingerichtet sind, dass sie Wirbelströme und resultierende Magnetfeldstörungen, die in Materialien ausserhalb der Detektionsstation entstehen, reduzieren oder eliminieren.

24. Vorrichtung nach irgendeinem der vorangehenden Patentansprüche, weiter einschliessend feldabschirmende Spulenmittel, die beabstandet ausserhalb der Empfangs- und Feldformungsspulenmittel so angeordnet sind, dass Ströme, welche in den Feldabschirmspulen durch die fluktuierenden Magnetfelder in der Station induziert werden, weitere Magnetfelder erzeugen, welche die Stärke von Magnetfeldern, die sich von der Detektionsstation nach aussen ausdehnen, vermindern.

## Revendications

1. Procédé de détection de métaux cachés, comprenant les étapes consistant à :
produire un champ électromagnétique fluctuant dans un passage;
faire passer une personne ou un objet dans ce passage, et
obtenir un signal électrique représentatif dudit champ électromagnétique lorsque la personne ou l'objet passe dans ce passage,
caractérisé en ce que l'on compare les valeurs de caractéristiques prédéterminées du signal électrique aux valeurs correspondantes de ces caractéristiques dans un signal électrique de base pour la personne ou l'objet en question, obtenu antérieurement, à un moment où l'on savait que cette personne ou cet objet ne détenait aucun métal dissimulé, et on produit un signal d'alarme quand la différence entre les valeurs comparées d'au moins l'une desdites caractéristiques desdits signaux dépasse un seuil prédéterminé.

2. Procédé suivant la revendication 1, dans lequel l'étape de production inclut le traitement du signal électrique pour déterminer des valeurs quantitatives pour chacune des caractéristiques de ce signal, et l'étape de comparaison comprend la comparaison des valeurs quantitatives à des valeurs de base correspondantes des caractéristiques pour la personne ou l'objet qui ont été obtenues auparavant, lorsque l'on savait que la personne ou l'objet en question ne détenait aucun métal dissimulé.

3. Procédé suivant la revendication 2, dans lequel l'étape de traitement comprend la démodulation dudit signal électrique pour produire un premier signal représentatif de la composante de résistance du champ électromagnétique et un deuxième signal représentatif de la composante de réaction du champ électromagnétique.

4. Procédé suivant la revendication 3, dans lequel l'étape de traitement comprend les étapes consistant à :
déterminer la valeur de chacun des premier et deuxième signaux à des intervalles de temps prédéterminés,
déterminer l'amplitude maximale de chacun des premier et deuxième signaux,
déterminer un angle de déphasage total entre le premier signal et le deuxième signal,
déterminer un angle de déphasage intermédiaire entre le premier signal et le deuxième signal, et
déterminer un angle de déphasage pour chacune de plusieurs positions différentes de la personne ou de l'objet en question dans le passage.

5. Appareil de détection de métaux dissimulés sur une personne ou dans un objet, comprenant :
des moyens de production d'un champ électromagnétique dans un passage,
des moyens de production d'un signal électrique représentatif de ce champ électromagnétique lorsque la personne ou l'objet en question franchit le passage, et
caractérisé en ce qu'il comporte des moyens permettant de comparer les valeurs de caractéristiques prédéterminées dudit signal aux valeurs correspondantes représentant un signal électrique de calibrage obtenu quand on savait que la personne ou l'objet en question ne détenait aucun métal caché, et
des moyens de production d'un signal d'alarme quand la différence entre les valeurs comparées d'au moins une desdites caractéristiques des signaux dépasse un seuil prédéterminé.

6. Appareil suivant la revendication 5, dans lequel les moyens de production d'un signal comprennent des moyens de démodulation du signal électrique pour produire un premier signal représentatif de la composante de résistance du champ électromagnétique et un deuxième signal représentatif de la composante de réaction dudit champ électromagnétique.

7. Appareil suivant la revendication 6, dans lequel les moyens de production d'un signal peuvent être mis en oeuvre pour déterminer la valeur de chacun des premier et deuxième signaux à des intervalles de temps prédéterminés, l'amplitude maximale de chacun desdits premier et deuxième signaux, un angle de déphasage total entre le premier signal et le deuxième signal, un angle de déphasage intermédiaire entre le premier signal et le deuxième signal, et un angle de déphasage pour chacune de plusieurs positions différentes de la personne ou de l'objet en question dans le passage.

8. Appareil suivant la revendication 5, dans lequel les moyens de production d'un champ électromagnétique dans un passage comprennent une bobine émettrice dans ce passage, avec un axe longitudinal dans le passage et des moyens de production d'un courant alternatif de fréquence prédéterminée dans cette bobine de façon à engendrer le champ magnétique en question autour de la bobine.

9. Appareil suivant la revendication 8, dans lequel les moyens de production d'un signal électrique comprennent deux bobines réceptrices dans le passage, ces bobines étant espacées coaxialement de part et d'autre de la bobine émettrice, ces bobines réceptrices ayant une borne commune et des bornes de sortie et réagissant à une modification du champ magnétique dans le passage pour produire des tensions alternatives dans les bobines réceptrices.

10. Appareil suivant la revendication 9, comprenant, en outre, un amplificateur possédant des bornes d'entrée connectées aux bornes de sortie des bobines réceptrices et une borne de sortie servant à produire ledit signal électrique.

11. Appareil suivant la revendication 10, comprenant, en outre, des moyens de production et d'adaptation d'un signal de référence au signal électrique provenant des bobines réceptrices, et des moyens permettant d'obtenir un signal différentiel qui soit la différence entre le signal de sortie amplifié des bobines réceptrices et ledit signal de référence.

12. Appareil suivant la revendication 11, comprenant un démodulateur destiné à recevoir le signal différentiel et à produire un premier et un deuxième signal de sortie représentatifs des composantes de résistance et de réaction dudit signal différentiel.

13. Appareil suivant la revendication 12, comprenant, en outre, des moyens de conversion servant à convertir le premier et le deuxième signal de sortie en un premier et un deuxième signal numérique de sortie, respectivement.

14. Appareil suivant la revendication 13, comprenant, en outre, des moyens de calcul destinés à traiter le premier et le deuxième signal de sortie numérique pour déterminer les valeurs de caractéristiques prédéterminées de ceux-ci et à comparer ces valeurs à des valeurs prédéterminées de calibrage des caractéristiques mentionnées représentatives de la personne ou de l'objet.

15. Appareil suivant la revendication 14, dans lequel les moyens de calcul peuvent être utilisés pour déterminer la valeur de chacun des premier et deuxième signaux à des intervalles de temps prédéterminés, l'amplitude maximale de chacun de ces premier et deuxième signaux, un angle de déphasage total entre le premier signal et le deuxième signal, un angle de déphasage intermédiaire entre le premier et le deuxième signal, et un angle de déphasage et des valeurs de signaux pour chacune de plusieurs positions différentes de la personne ou de l'objet dans le passage.

16. Appareil suivant la revendication 10, comprenant, en outre, des moyens servant à réduire l'effet du déplacement d'objets dans le passage à faible distance des bobines réceptrices.

17. Appareil suivant la revendication 16, dans lequel lesdits moyens de réduction comprennent des moyens constitués par des bobines et servant à donner sa forme au champ, associés aux moyens constitués par des bobines réceptrices et réagissant au champ magnétique à leur voisinage en induisant un champ magnétique supplémentaire dans le poste de contrôle, les tensions induites dans des moyens constitués par des bobines réceptrices étant notablement influencées par les courants qui passent dans les bobines supplémentaires qui donnent sa forme au champ.

18. Appareil suivant la revendication 17, comprenant, en outre, des moyens pour maintenir le champ magnétique supplémentaire dans une relation de déphasage sélectionnée par rapport au champ électrique produit par la bobine émettrice.

19. Appareil suivant la revendication 5, comprenant, en outre, une unité en portique définissant le passage dans lequel la personne se déplace, les bobines étant placées coaxialement l'une par rapport à l'autre dans des plans sensiblement perpendiculaires à l'axe du passage dans lequel se déplace la personne.

20. Appareil suivant la revendication 18, dans lequel les moyens constitués par des bobines et servant à donner sa forme au champ comprennent deux bobines de détermination de la forme du champ, situées chacune à côté de l'une des bobines réceptrices.

21. Appareil suivant la revendication 10, comprenant, en outre, un condensateur connecté à la borne commune pour créer des conditions de résonance entre les bobines réceptrices pendant le fonctionnement, de sorte que lorsque la tension aux bornes d'une bobine réceptrice croît, la tension aux bornes de l'autre décroît, si bien que la tension nette aux bornes des deux bobines réceptrices est sensiblement nulle quand le passage est vide.

22. Appareil suivant la revendication 10, comprenant, en outre, des moyens pour ramener à zéro ou annuler toute tension déséquilibrée induite dans les bobines réceptrices, et provenant d'imprécisions dans le bobinage des bobines et de causes analogues.

23. Appareil suivant l'une quelconque des revendications précédentes, comprenant, en outre, un blindage ferromagnétique situé et disposé de telle manière qu'il réduise ou élimine les courants de Foucault et les perturbations du champ magnétique qui en résultent, qui se produisent dans des matériaux extérieurs au poste de détection.

24. Appareil suivant l'une quelconque des revendications précédentes, comprenant, en outre, des bobines faisant écran aux champs, espacées à l'extérieur des bobines réceptrices et des bobines servant à donner sa forme au champ, et disposées de telle manière que les courants induits dans les bobines faisant écran aux champs par les champs magnétiques fluctuant dans le poste de contrôle fassent apparaître de nouveaux champs magnétiques qui agissent pour réduire l'intensité des champs magnétiques qui sortent du poste de détection.
